# EUROPEAN PATENT SPECIFICATION

(11) **EP 3 916 318 B1**
(45) Date of publication and mention of the grant of the patent: **30.04.2025**
(21) Application number: 21175790.1
(22) Date of filing: 25.05.2021
(51) Int. Cl.: F24F 13/20, F24F 13/32, F24F 11/56, F24F 11/89, F24F 6/04, F24F 8/108, F24F 8/117, F24F 8/125, F24F 8/80, F24F 130/40

(54) **HUMIDIFICATION AND AIR CLEANING APPARATUS**
BEFEUCHTUNGS- UND LUFTREINIGUNGSVORRICHTUNG
APPAREIL DE NETTOYAGE D'AIR ET D'HUMIDIFICATION

(30) Priority: 26.05.2020 KR 20200063068
(43) Date of publication of application: 01.12.2021
(73) Proprietor: LG Electronics Inc., Seoul 07336 (KR)
(72) Inventor: Yang, Seungdeok, 08592 Seoul (KR); Jung, Jaehyuk, 08592 Seoul (KR); Lee, Taehun, 08592 Seoul (KR); Choi, Seokho, 08592 Seoul (KR)
(74) Representative: Ter Meer Steinmeister & Partner

(56) References cited:
- EP-A1- 3 163 178
- EP-A1- 3 163 203
- CN-A- 108 444 003
- CN-A- 108 716 735
- CN-A- 108 758 936
- CN-B- 104 456 787
- CN-U- 208 205 306
- KR-A- 20170 051 183
- KR-A- 20190 026 522
- US-A1- 2018 335 228

## Description

This application claims the priority benefit of Korean Patent Application No. 10-2020-0063068, filed on May 26, 2020 in the Korean Intellectual Property Office.

### BACKGROUND OF THE INVENTION

### 1. Field of the Invention

The present invention relates to a humidification and air cleaning apparatus equipped with an input assembly.

### 2. Description of the Related Art

Air conditioners include an air conditioner that controls the temperature of the air, an air purifier that removes foreign substances from the air to maintain cleanliness, a humidifier that provides moisture to the air, and a dehumidifier that removes moisture from the air.

Conventional humidifiers are classified into a vibration type that atomizes water from a vibration plate and discharges it into the air, and a natural evaporation type that evaporates naturally from a humidification filter.

The natural evaporation humidifier is classified into a disk type humidifier evaporating the water on the surface of the disk by rotating the disk with the driving force, and a humidification filter-type humidifier naturally evaporating the water soaked into the humidification medium in which the air flows.

The main purpose of the conventional humidifier is to humidify the air, and the main purpose of the conventional air purifier is to filter foreign substances in the air. To compensate for this, a humidification cleaning device that simultaneously humidifies and filters air has been developed.

Conventional humidification and cleaning devices are operated by receiving a remote control signal or inputting a user's control signal.

With the development of technology, types of home appliances provided in homes are increasing, and various kinds of additional functions provided in home appliances are increasing. Accordingly, research has been actively conducted to apply artificial intelligence technology to the humidification and cleaning device and to allow the user to control the humidification and cleaning device with voice.

EP 3 163 203 A1 presents an air freshener. The air freshener includes a body case defining the air freshener, the body case having a filter installation opening formed in one side thereof, a filter housing disposed in the body case, a drawer including a frame forming therein a drawer opening, through which air passes, and a filter cover coupled to the frame for covering the filter installation opening, and a filter module separably located on the frame for filtering the air that has passed through the drawer opening. The drawer is configured to be withdrawn from the inner space of the filter housing through the filter installation opening.

### SUMMARY OF THE INVENTION

An object of the present invention is to provide a structure for installation of a voice recognition module of a humidifying and cleaning apparatus recognizing a user's voice effectively.

An object of the present invention is to provide a structure for installing of a voice recognition module of a humidification cleaning device improving recognition when recognizing a user's voice.

An object of the present invention is to provide a structure for installing a voice recognition module of a humidification cleaning device minimizing the effect of operating noise.

An object of the present invention is to provide a structure for installing a voice recognition module of a humidifying and cleaning device minimizing the effect of moisture.

The problems of the present disclosure are not limited to the problems mentioned above, and other problems that are not mentioned will be clearly understood by those who skilled in the art from the following description. One or more of the objects are solved by the features of the independent claim.

In the present disclosure, since an input assembly receiving a voice signal may be exposed to the outside, a user's voice may be effectively recognized.

In the present invention, since the leg wall may be disposed between the input assembly and the lower housing inlet, it is possible to suppress the propagation of the operating noise generated from the blowing unit to the input assembly.

In the present invention, since the leg wall and a plurality of legs may form a concave space and the input assembly may be disposed in front of the concave space, a user's voice signal may be reflected to the input assembly.

In the present invention, since the input assembly may be disposed in a lower housing far from the watering unit or the blowing unit where the operating noise is generated, the influence of the operating noise may be minimized.

In the present invention, since the input assembly in which the microphone is disposed may be located outside the leg wall, the influence on moisture may be minimized.

According to one aspect of the invention, a humidification and air cleaning apparatus comprises a lower base, a lower housing, a plurality of legs, a leg wall, and an input assembly. The lower base is supported by the ground. The lower housing is spaced apart upwardly from the lower base and forms a suction gap by being spaced apart from the lower base. The plurality of legs is disposed on at least one of the lower base and the lower housing. The plurality of legs supports the lower housing. The leg wall connects two legs adjacent to each other. The input assembly is disposed at the lower housing. The input assembly protrudes toward the suction gap. The input assembly receives a wireless signal. The plurality of legs includes a first leg and a second leg adjacent to each other. The input assembly is disposed outside the leg wall.

According to another aspect, a humidification and air cleaning apparatus comprises a lower base for supporting the apparatus on the ground; a lower housing spaced apart from the lower base for forming a suction gap therebetween; a plurality of legs disposed between the lower base and the lower housing for supporting the lower housing on the lower base; a leg wall connecting two adjacent legs, i.e. a first leg and a second leg, among the plurality of legs; and an input assembly protruding into the suction gap and configured to receive a wireless signal, wherein the leg wall is disposed between the input assembly and a vertical center line of the apparatus. The lower housing may be disposed on or above the lower base. In the present disclosure, directional indications, such as "above", "upper", "up and down direction" may refer to an operational position of the apparatus. The vertical center line may refer to a vertical line passing through the center of the apparatus or a center of the lower base or of the lower housing, e.g. a center of area thereof. The input assembly may be disposed at the lower housing and protrude toward the lower base, or the input assembly may be disposed at the lower base and protrude toward the lower housing.

The humidification and air cleaning apparatus according to one of the above aspects may comprise one or more of the following preferred features:
The humidification and air cleaning apparatus may further include a lower housing suction hole. The lower housing suction hole may be disposed inside the lower housing. The lower housing suction hole may be a through hole passing through the lower housing, e.g. through a center of the lower housing, in the vertical direction. The lower housing may have a plate shape. The lower housing suction hole may be opened in the up and down direction, i.e. in the vertical direction. The leg wall may be disposed between the lower housing suction hole and the input assembly.

An upper end or one end of the leg wall may be coupled to the lower housing. A lower end or another end of the leg wall may be coupled to the lower base. The one end and the other end being opposite to or facing away from each other. That is, the leg wall may extend between the lower housing and the lower base and/or may connect the lower housing and the lower base to each other. Thus, the leg wall may seal between the first leg and the second leg.

The leg wall may be disposed or formed to be inclined with respect to the up and down direction, i.e. in the vertical direction. The upper end of the leg wall may be disposed outside a lower end of the leg wall. Thus, the noise propagated from the lower housing suction hole may be effectively reflected.

The input assembly may further include a microphone reception hole through which the voice signal passes. The microphone reception hole may be disposed within a height of the leg wall. That is, the leg wall may extend from the lower housing further downwards than a vertical position of the microphone reception hole, or the leg wall may extend from the lower base further upwards than a vertical position of the microphone reception hole. That is, a vertical position of the leg wall may correspond to a vertical position of the microphone reception hole. A horizontal plane through the microphone reception hole may thus pass through the leg wall.

The lower housing, viewed from the top, may have a circular shape. The input assembly may be disposed outside the leg wall. The input assembly may be disposed outside the leg wall in a radial direction of the lower housing.

The plurality of legs may be disposed radially, viewed from the top, with regard to a center of the lower housing.

The leg wall may have a flat surface. In particular, a surface of the leg wall extending vertically and perpendicular to the radial direction of the apparatus may be flat.

The humidification and air cleaning apparatus may further include an outer space. The outer space may be opened to an outside. The outer space may be surrounded by the first leg, the second leg and the leg wall. The outer space may be concave inwardly from the outside in a radial direction of the lower housing or of the lower base.

That is, the humidification and air cleaning apparatus may further include an outer space defined between the first leg, the second leg and the leg wall. The outer space may be opened towards the suction gap and/or the outside of the apparatus. The first leg and the second leg may protrude further radially outwards than the leg wall so that the outer space is formed to be inwardly concave from the outside. The input assembly may be arranged in the outer space, in particular at a circumferential edge of the lower housing or the lower base and in the outer space.

The input assembly may comprise an input housing and a microphone. The input housing may be disposed at the outside of the outer space. A microphone reception hole may be formed at the input housing. The voice signal may pass through the microphone reception hole. The microphone may be disposed at the input housing. The microphone may be exposed partially to an outside through the microphone reception hole.

The input housing may be disposed to face the leg wall. A left end and a right end of the input housing may be disposed between the first leg and the second leg.

The outer space may be formed further which is opened outwardly and which is surrounded by the first leg, the second leg, and the leg wall. The outer space may be formed inwardly concave from the outside in a radial direction. The input housing may be disposed at the outside of the outer space.

The plurality of legs may be disposed radially, viewed from the top, with regard to a center of the lower housing. The outer space may be disposed to expand in the outward radial direction.

The upper end of the leg wall may be coupled to the lower housing. The lower end of the leg wall may be coupled to the lower base. The left end of the leg wall may be coupled to the first leg. The right end of the leg wall may be coupled to the second leg.

The humidification and air cleaning apparatus may further include a lower housing suction hole. The lower housing suction hole may be disposed inside the lower housing. The lower housing suction hole may be opened in the up and down direction. The leg wall may be disposed between the lower housing suction hole and the input housing.

The microphone reception hole may be disposed to face a side opposed to the lower housing suction hole.

The lower end of the lower housing may be higher than the lower end of the leg wall and is lower than the upper end of the leg.

The humidification and air cleaning apparatus may further include a remote control sensor which is disposed in the input housing and which receives a remote control signal.

### BRIEF DESCRIPTION OF THE DRAWINGS

FIG. 1 is a perspective view of the humidification and air cleaning apparatus according to the first embodiment of the present invention.
FIG. 2 is an exploded perspective view of FIG. 1.
FIG. 3 is an exploded front view of FIG. 1.
FIG. 4 is a cross-sectional view of FIG. 2.
FIG. 5 is a perspective view showing the inside of the lower body shown in FIG. 2.
FIG. 6 is a front view of FIG. 5.
FIG. 7 is a left side view of FIG. 5.
FIG. 8 is a perspective view of the lower housing shown in FIG. 5.
FIG. 9 is a plan view of FIG. 8.
FIG. 10 is an enlarged view showing the surroundings of the input assembly of FIG. 3.
FIG. 11 is a bottom view of the lower housing shown in FIG. 8.
FIG. 12 is a cross-sectional view cut along line A-A' shown in FIG. 11.
FIG. 13 is a graph in which noise in front of a leg wall is shown.
FIG. 14 is a perspective view showing the inside of the input assembly shown in FIG. 1.
FIG. 15 is a cross-sectional perspective view cut along line I-I' of FIG. 14.
FIG. 16 is a perspective view of the microphone shown in FIG. 14.
FIG. 17 is a cross-sectional view cut along line II-II' shown in FIG. 16.

### DETAILED DESCRIPTION OF THE PREFERRED EMBODIMENTS

Advantages and features of the present invention, and a method of achieving them will become apparent with reference to the embodiments described below in detail together with the accompanying drawings. However, the present invention is not limited to the embodiments disclosed below but may be implemented in a variety of different forms. The present embodiments are provided to disclose completely the present invention and to fully inform the scope of the present invention to those who skilled in the art to which the present invention pertains. The invention is only defined by the scope of the claims. The same reference sign refers to the same elements throughout the whole specification.

Thereinafter, embodiment of the present invention will be described in detail with referenced drawings.

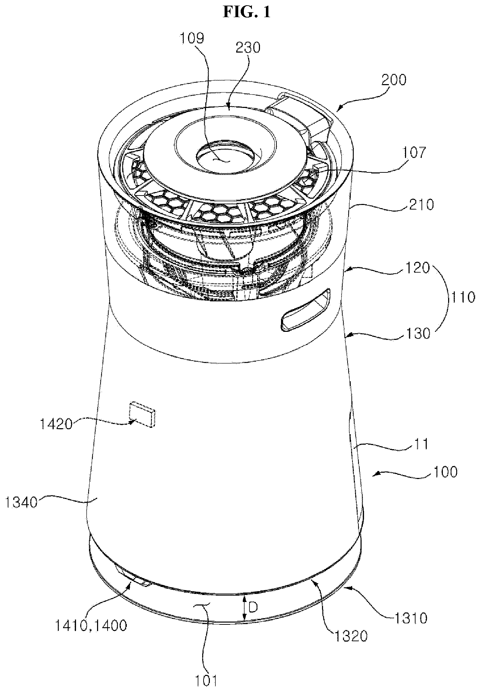

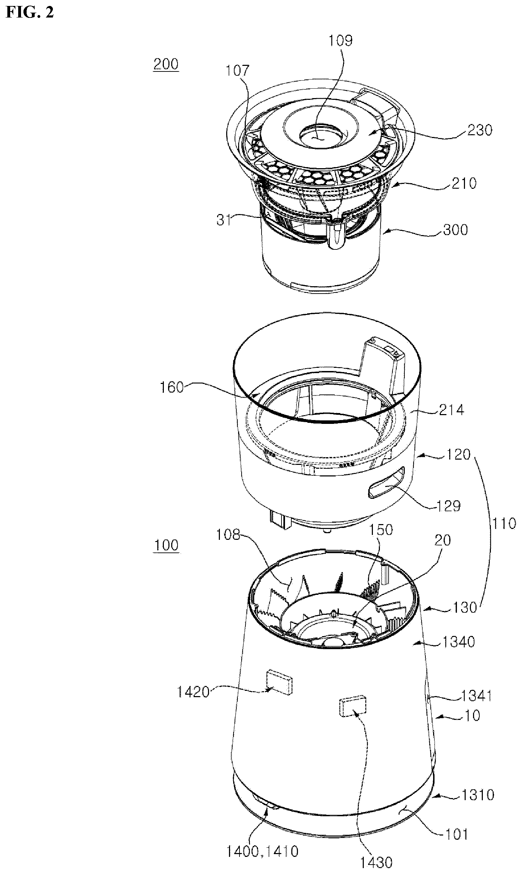

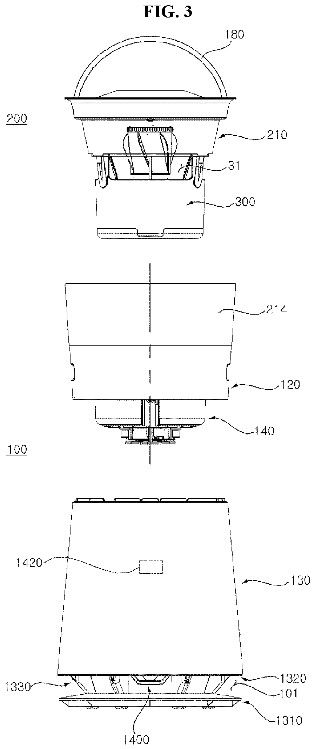

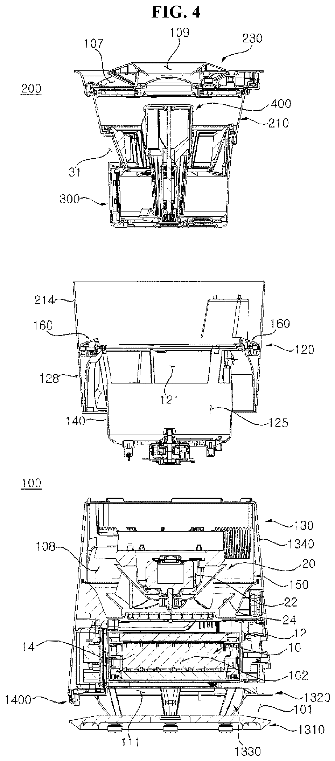

FIG. 1 is a perspective view of the humidification and air cleaning apparatus according to the first embodiment of the present invention. FIG. 2 is an exploded perspective view of FIG. 1. FIG. 3 is an exploded front view of FIG. 1. FIG. 4 is a cross-sectional view of FIG. 2.

Referring to FIG. 1 to FIG. 4, the humidification and air cleaning apparatus according to the present embodiment may include an air clean module 100 and an air wash module 200 mounted on an upper side of the air clean module 100, and a voice recognition module 1400 may be disposed in the air clean module 100.

The air clean module 100 sucks and filters the external air and provides the filtered air to the air wash module 200. The air wash module 200 receives the filtered air and provides moisture to the flowing filtered air, and then discharges the humidified air to the outside.

The air wash module 200 may include a water tank 300 in which water is stored. The upper side surface of the water tank 300 may be exposed to the outside. The water tank 300 may constitute a part of the air wash module 200.

When the air wash module 200 is separated, the water tank 300 is separable from the air clean module 100 together with the air wash module 200. The air wash module 200 may be mounted above the air clean module 100.

The user may separate the air wash module 200 from the air clean module 100 and clean the separated air wash module 200. The user may clean the inside of the air clean module 100 from which the air wash module 200 is separated. When the air wash module 200 is separated, the upper surface of the air clean module 100 may be exposed to the user. The air clean module 100 may be cleaned after separating the filter assembly 10 described later.

The user may directly supply water to the water tank 300 while the air wash module 200 is mounted on the air clean module 100. A water supply passage through which water can be supplied from the outside thereof to the water tank 300 is formed in the air wash module 200.

The water supply passage is configured to supply water to the water tank at any time. For example, even when the air wash module 200 is in operation, water may be supplied through a water supply passage. For example, even when the air wash module 200 is coupled to the air clean module 100, water may be supplied through a water supply passage.

The air clean module 100 may include a base body 110. The air clean module 100 may include a filter assembly 10 disposed on the base body 110 and filtering the air. The air clean module 100 may include a blowing unit 20 disposed on the base body 110 and causing the air to flow.

The air wash module 200 may include the water tank 300 storing the water for humidification and separably mounted on the air clean module 100. The air wash module 200 may include a watering unit 400 disposed in the inside of the water tank 300 and spraying the water of the water tank 300. The air wash module 200 may include a humidifying medium 50 wetted by the water sprayed from the watering unit 400 and supplying moisture to the flowing air. The air wash module 200 may include a visual body 210 coupled to the water tank 300 and formed of a material that can see the inside. The air wash module 200 may include a top cover assembly 230 mounted separably on the visual body 210 and on which a discharging flow path 109 discharging the air and a water supplying flow path 107 supplying the water is formed.

### <<<Composition of the Air Wash Module>>>

Referring to FIG. 1 to FIG. 4, the air wash module 200 may supply the moisture to the filtered air. The air wash module 200 may realize the rain view. The air wash module 200 may spray the water in the water tank and circulate it. The air wash module 200 may transform water into the small droplets and wash the filtered air again by the scattered droplets. When wash the filtered air by the scattered droplets, humidification and filtering are performed again.

The air wash module 200 may include the water tank 300, the watering unit 400, the humidifying medium 50, the visual body 210, the top cover assembly and a handle 180.

The handle 180 is coupled to the visual body 210 and rotates on the visual body 210 and is accommodated in the visual body 210. The air wash module 200 may be lifted through the handle 180 with ease and may be separated from the air clean module 100.

The water tank 300 may be separably mounted on an upper body assembly 120. The watering unit 400 may be disposed inside the water tank 300 and may rotate inside the water tank 300.

### <<<Composition of the Air Clean Module>>>

Referring to FIG. 1 to FIG. 4, the air clean module 100 may include the base body 110. The air clean module 100 may include the filter assembly 10 disposed on the base body 110 and filtering the air. The air clean module 100 may include the blowing unit disposed on the base body 110 and making the air to flow. The air clean module 100 may include the voice recognition module 1400 disposed on the base body 110.

The base body 110 may include the upper body assembly 120, a lower body assembly 130 and a lower base 1310.

The lower base 1310 is settled on the ground, and the lower body assembly 130 and the upper body assembly 120 are sequentially arranged above the lower base 1310.

The lower body assembly 130 is spaced apart from the lower base 1310 and a suction hole 101 is disposed between the lower base 1310 and the lower body assembly 130. The lower base 1310 and the lower body assembly 130 are spaced apart in the vertical direction to form a suction gap D. The suction gap D is formed in the entire 360-degree lateral direction thereof.

The air passing through the suction hole 101 flows into the lower body assembly 130.

The upper body assembly 120 may be stacked on the upper side of the lower body assembly 130, and the upper body assembly 120 and the lower body assembly 130 may be assembled.

The base body 110 may form the outer shape of the air clean module 100. The filter assembly 10 and the blowing unit 20 may be disposed inside the base body 110.

The air flows into the base body 110.

The base body 110 may include the lower body assembly 130 forming an outer shape and in which the suction hole 111 is formed on a lower side thereof and accommodating the filter assembly 10 and the blowing unit 20. The base body 110 may include the upper body assembly 120 forming the outer shape and coupled to the upper side of the lower body assembly 130.

### <<Composition of the Lower Body Assembly>>

Referring to FIG. 1 to FIG. 4, the lower body assembly 130 may include a lower housing 1320 disposed above the lower base 1310 and forming the suction hole 101 by being spaced apart from the lower base 1310. The lower body assembly 130 may include a plurality of legs 1330 disposed between the lower base 1310 and the lower housing 1320 and supporting the lower housing 1320 and separating the lower housing 1320 and the lower base 1310. The lower body assembly 130 may include a lower cover 1340 forming the shape by surrounding the outside of the lower housing 1320.

The lower base 1310 supports the load of the humidification and air cleaning apparatus. The lower base 1310 is supported by the ground.

In the top view of this embodiment, the lower base 1310 may be formed in a ring or disk shape.

The leg 1330 may have a lower end assembled to the lower base 1310 and an upper end assembled to the lower housing 1320. In this embodiment, the leg 1330 may be manufactured with the lower housing 1320 as one body by injection molding. So, the leg 1330 is assembled with the lower base 1310.

The plurality of legs 1330 may be disposed between the lower base 1310 and the lower housing 1320.

The suction hole 101 may be formed by the plurality of legs 1330. The suction hole 101 may suck the air in 360-degree direction.

The lower base 1310 and the lower housing 1320 are vertically spaced to form the suction gap D, and the suction hole 101 may be formed by the suction gap D.

The load of the entire structure above the lower housing 1320 may be supported by the plurality of legs 1330. In this embodiment, the plurality of legs 1330 are disposed.

The bottom of the lower housing 1320 may communicate with the suction hole 101 and may guide the air from the suction hole 101 to the filter assembly 10. In this embodiment, the filter assembly 10 may be assembled to the lower housing 1320 and the filter housing 1200, which will be described later, may be assembled to the lower housing 1320.

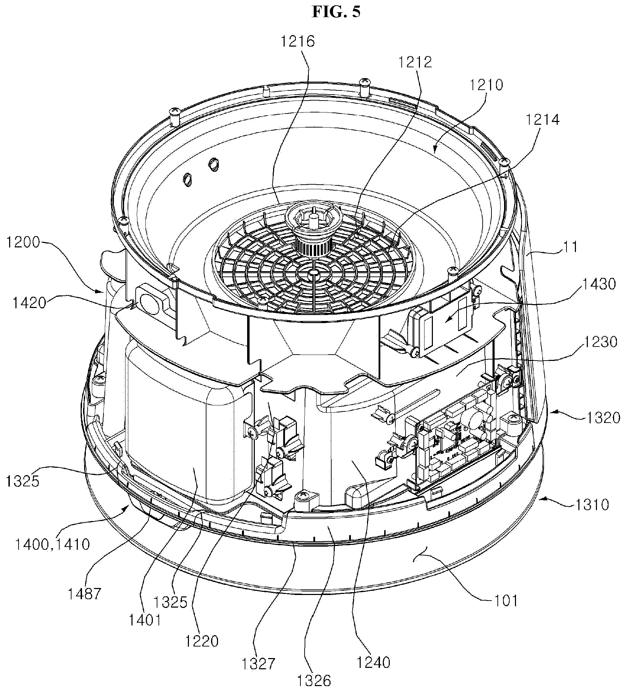

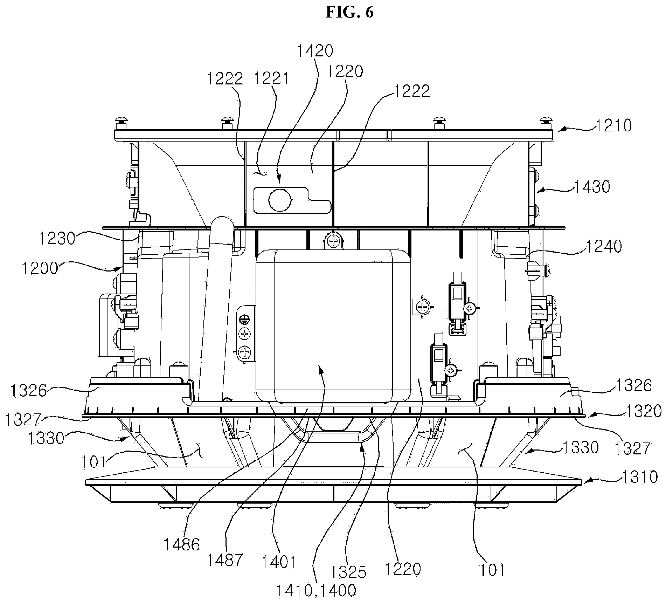

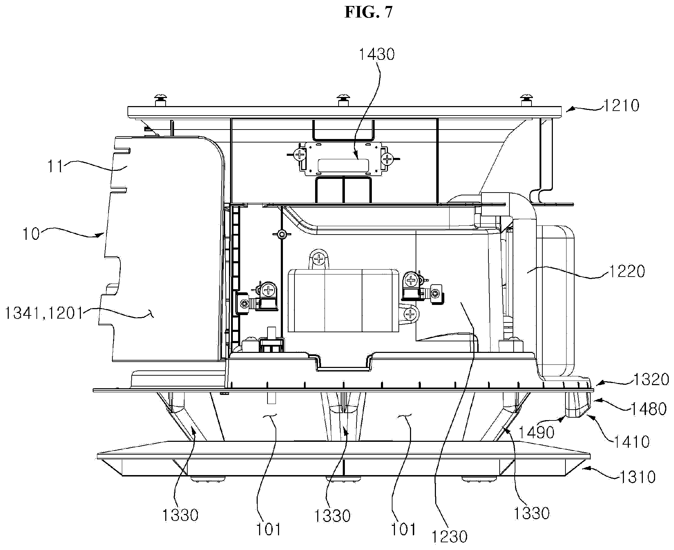

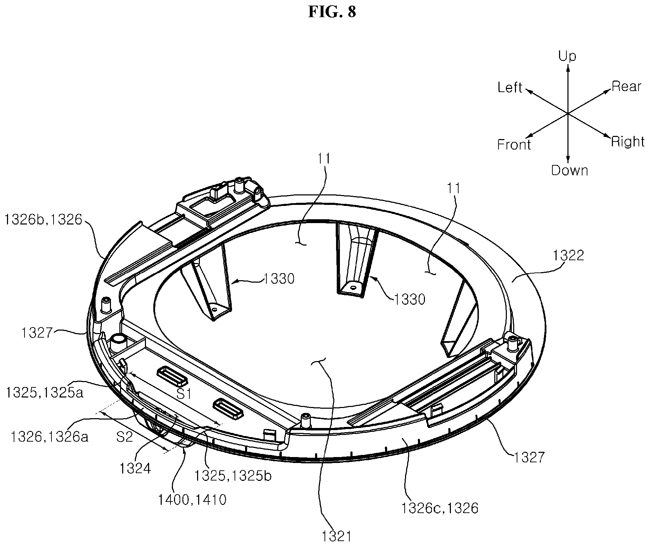

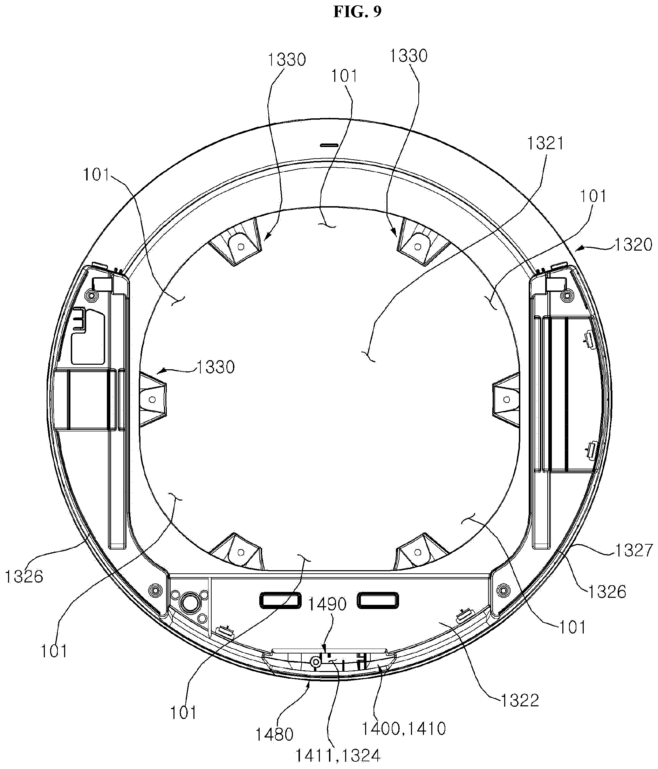

FIG. 5 is a perspective view showing the inside of the lower body shown in FIG. 2. FIG. 6 is a front view of FIG. 5. FIG. 7 is a left side view of FIG. 5. FIG. 8 is a perspective view of the lower housing shown in FIG. 5. FIG. 9 is a plan view of FIG. 8.

Referring to FIG. 8 and FIG. 9, the lower housing 1320 may include a lower housing body 1322 supported by the leg 1330. The lower housing 1320 may include a lower housing suction hole 1321 communicating with the suction hole 101 and opened upward and downward and disposed inside of the lower housing body 1322. The lower housing 1320 may include a voice recognition module installation part 1324 disposed on the lower housing body 1322 and assembling with the voice recognition module 1400. The lower housing 1320 may include a lower cover lateral surface supporting part 1326 disposed on the lower housing body 1322 and supporting the lower cover 1340. The lower housing 1320 may include a lower cover bottom supporting part 1327 disposed on the lower housing body 1322 and supporting the bottom of the lower cover 1340.

In this embodiment, the lower housing body 1322 is formed in a ring shape when viewed from a top view, and the lower housing suction hole 1321 is formed inside thereof.

The lower housing suction hole 1321 passes through the lower housing body 1322 in the up and down direction.

The leg 1330 may be manufactured with the lower housing body 1322 as one body and may protrude downward from the lower housing body 1322. Unlike the present embodiment, the leg 1330 may be separately manufactured and then assembled to the lower housing body 1322.

The filter housing 1200 may be stacked above the lower housing body 1322. The lower housing body 1322 and the filter housing 1200 may be fastened.

The lower housing body 1322 is in close contact with the bottom surface of the filter housing 1200, thereby the leakage between the filter housing 1200 and the lower housing body 1322 of the air sucked through the suction hole 101 is minimized.

The voice recognition module 1400 may be installed inside the base body 110. In this embodiment, the voice recognition module 1400 is exposed to an outside of the base body 110 to improve the probability of recognition.

The voice recognition module installation part 1324 has an installation structure in which the voice recognition module 1400 is installed. The voice recognition module installation part 1324 provides a structure for exposing the voice recognition module 1400 to the outside.

The voice recognition module installation part 1324 may be formed in the form of a hole penetrating the lower housing body 1322 in the up and down direction. The voice recognition module 1400 passes through the voice recognition module installation part 1324 formed in a hole shape and may be assembled to the lower housing body 1322.

In the present embodiment, the voice recognition module installation part 1324 is formed by opening the part of the lower housing body 1322, the lower cover lateral surface supporting part 1326 and the lower cover bottom supporting part 1328.

The voice recognition module installation part 1324 is formed by opening a part of the front side of the lower housing 1320. The voice recognition module installation part 1324 is formed concavely from the front to the rear side of the lower housing 1320 and forms a continuous line with the lower housing 1320 when the voice recognition module 1400 is installed.

The voice recognition module 1400 is assembled by being inserted into the voice recognition module installation part 1324 in the direction from the top to the bottom. The voice recognition module installation part 1324 has a stopper 1325 to form a mutual engagement with the voice recognition module 1400.

In this embodiment, the stopper 1325 is formed over the lower cover lateral surface supporting part 1326 and the lower cover bottom supporting part 1327. The locking end 1325 may include a first stopper 1325a forming a mutual engagement with the left edge of the voice recognition module 1400, and a second stopper 1325b forming a mutual engagement with the right edge of the voice recognition module 1400.

The voice recognition module 1400 is disposed between the first stopper 1325a and the second stopper 1325b. The lower side distance S2 is formed wider than the upper side distance S1 between the first and second stoppers 1325a, 1325b.

In addition, the voice recognition module installation part 1324 is disposed on an extension line of the lower cover lateral surface supporting part 1326 and the lower cover bottom supporting part 1327.

The lower cover lateral surface supporting part 1326 is formed to be protruded upwardly from the lower housing body 1322. The lower cover lateral surface supporting part 1326 is formed along the outer edge of the lower housing body 1322. The lower cover 1340 is in close contact with the lower cover side support 1326.

Since the lower housing body 1322 is formed in a plate shape, bending deformation may occur thereto. Since the lower cover lateral surface supporting part 1326 is protruded upwardly from the lower housing body 1322, the strength of the outer edge of the lower housing 1320 may be increased.

The voice recognition module installation part 1324 forms a part of the lower cover lateral surface supporting part 1326 and the lower cover bottom supporting part 1327.

The lower cover lateral surface supporting part 1326 and the lower cover bottom supporting part 1327 may be formed only on some edges of the lower housing body 1322.

In this embodiment, the lower cover lateral surface supporting part 1326 and the lower cover lower part supporting part 1328 are disposed at the front, left and right sides, and are not formed at the rear side into which a filter 14 is inserted.

The lower cover side support 1326 may include a first lower cover supporting part 1326a disposed on the front edge of the lower housing body 1322 and a second lower cover supporting part 1326b disposed on the edge of the left side of the lower housing body 1322 and a third lower cover supporting part 1326c disposed on the edge of the right side of the lower housing body 1322.

The lower cover bottom supporting part 1327 may be located on the same plane as the lower housing body 1322. The lower cover bottom supporting part 1327 is protruded from the lower cover lateral surface supporting part 1326 in the horizontal direction.

The lower end of the lower cover 1340 is supported by the upper side of the lower cover bottom supporting part 1327. In the present embodiment, the lower cover bottom supporting part 1328 is protruded radially from the center of the lower housing suction hole 1321.

The lower cover lower end supporting part 1327 is disposed outside the lower cover lateral surface supporting part 1326. In this embodiment, the lower cover lower supporting part 1328 is protruded radially from the lower cover lateral surface supporting part 1326.

The lower cover bottom supporting part 1328 may be formed on all of the first lower cover supporting part 1326a, the second lower cover supporting part 1326b, and the third lower cover supporting part 1326c.

Since the voice recognition module 1400 forms a continuous surface with a part of the lower housing 1320, some of the outer surfaces of the voice recognition module 1400 provides continuous surface with the lower cover lateral surface supporting part 1326 and the lower cover bottom supporting part 1328. In addition, some of the outer surface of the voice recognition module 1400 provides some functions of the lower cover lateral surface supporting part 1326 and the lower cover bottom supporting part 1327.

Referring to FIG. 1 or FIG.2, the lower cover 1340 forms an outer surface of the lower body assembly 130.

The lower cover 1340 has a lower cover opening 1341 formed on the side surface of the lower cover 1340. The filter assembly 10 may be inserted in the lateral direction through the lower cover opening 1341.

The lower cover 1340 is supported by the upper side surface of the lower housing 1320. The inner side surface of the lower cover 1340 is in close contact with the lower cover lateral surface supporting part 1326, and the lower end is supported by the lower cover bottom supporting part 1327.

The lower cover 1340 may be fastened and fixed to at least one of the lower housing 1320 and the upper body assembly 120.

The lower cover 1340 has an opened upper side and an opened lower side. The lower cover 1340 has a cylindrical shape with the opened lower side wider than the opened upper side.

The lower cover 1340 covers and hides the filter assembly 10 and the blowing unit 20 disposed inside the lower body assembly 130.

In this embodiment, the voice recognition module 1400 is exposed outside the lower cover 1340. Since the voice recognition module 1400 is protruded below the lower housing 1320, it is not covered by the lower cover 1340.

The voice recognition module 1400 is protruded downwardly from the lower cover 1340 and is exposed to the user.

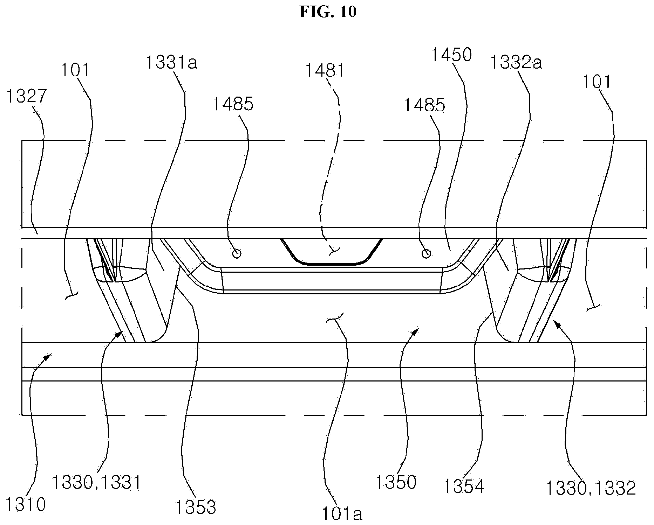

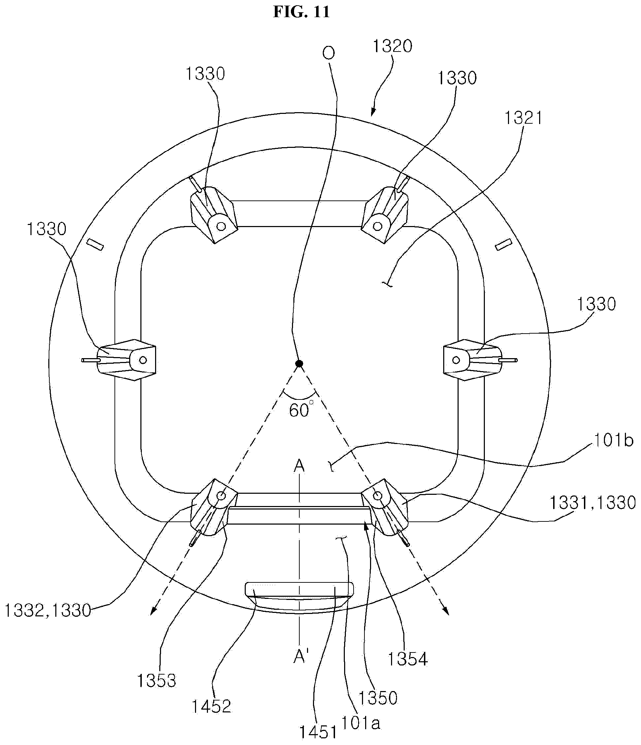

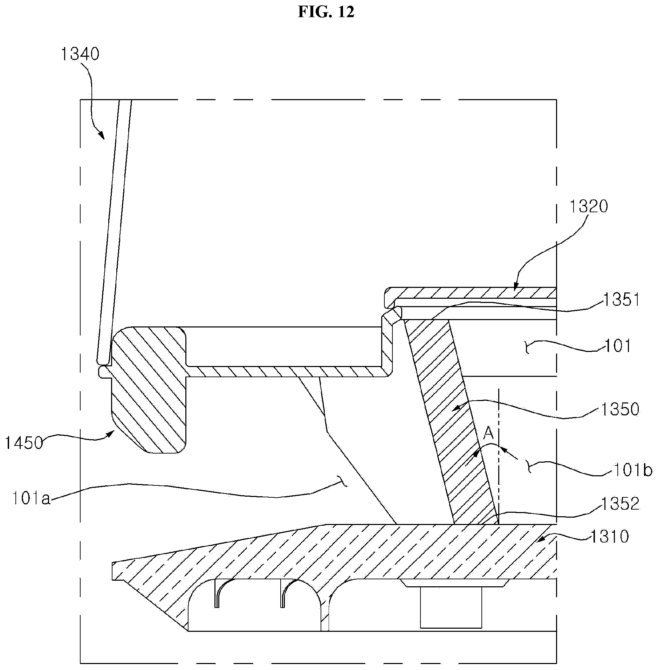

FIG. 10 is an enlarged view showing the surroundings of the input assembly of FIG. 3. FIG. 11 is a bottom view of the lower housing shown in FIG. 8. FIG. 12 is a cross-sectional view cut along line A-A' shown in FIG. 11.

Referring to FIG. 10 to FIG.12, a leg wall 1350 connecting two of the plurality of legs 1330 is disposed.

The leg 1330 is configured in plural, and in this embodiment, six legs 1330 are disposed. The plurality of legs 1330 are disposed radially with respect to a center O of the lower housing 1320, and each leg 1330 is disposed with interval of 60 degrees with respect to the center O.

The center O may be the inner core of the lower housing 1320 and may be located on the motor shaft of the blower motor 22. Each of the legs 1330 may be disposed heading for the center O, and the lower end of each leg 1330 is closer to the center O than the upper end each leg 1330.

The leg wall 1350 connects two adjacent legs among the plurality of legs 1330. In this embodiment, the leg wall 1350 is disposed in front. Among the plurality of legs 1330 combined with the leg wall 1350, what is disposed on one side (the left in this embodiment) is a first leg 1331 and what is disposed on the other side (right side in this embodiment) is a second leg 1332.

The upper end 1351 of the leg wall 1350 is coupled to the lower housing 1320. The lower end 1352 is coupled to the lower base 1310. A left end 1353 is coupled to the first leg 1331. A right end 1354 is coupled to the second leg 1332.

The leg wall 1350 completely seals the first leg 1331 and the second leg 1332. A front of the leg wall 1350 is disposed outside the suction hole 101, and a rear surface is disposed on the side of the suction hole 101.

The lower end of the lower housing 1320 is disposed higher than the lower end 1352 of the leg wall 1350. The lower end of the lower housing 1320 is disposed lower than the upper end 1351 of the leg 1350.

In addition, the suction hole 101 is divided into an outer space 101a and an inner space 101b by the leg wall 1350. An input assembly 1410 described later is disposed in the outer space 101a. The input assembly 1410 may receive a wireless signal. For example, the input assembly 1410 may receive a user's voice signal or a remote control signal.

The input assembly 1410 is spaced apart from the leg wall 1350, is disposed in front of the leg wall 1350, and is in the outer space 101a.

The leg wall 1350 is disposed to be inclined with respect to the vertical direction, and in this embodiment, the upper end 1351 is inclined to be positioned in front of the lower end 1352. In this embodiment, the inclination angle A of the leg wall 1350 is 15 degrees.

The leg wall 1350 may be formed in a curved surface with the center O as a center of curvature. In this embodiment, the leg wall 1350 may have a flat surface and may be disposed to face an input housing 1450 described later.

Since the leg wall 1350 is disposed between the lower housing suction hole 1321 and the input assembly 1410, noise propagating from propagating to the input assembly 1410 through the lower housing suction hole 1321 may be suppressed.

For example, the noise through the lower housing suction hole 1321 may be a sound of water caused by the operation of the watering unit 400, an operation noise caused by the operation of the blower motor 22, and the like.

In addition, the user's voice may be reflected by a front surface of the leg wall 1350, thereby improving a possibility of recognition.

In the frontal view, the outer space 101a may be concave backwardly, thereby the user's voice may be collected toward the input assembly 1410.

### <<Composition of the Filter Assembly>>

Referring to FIG. 4 to FIG. 7, the filter assembly 10 is assembled detachably with the base body 110.

The filter assembly 10 provides a filtering flow path 102 and filters outside air. The filter assembly 10 has a structure that can be detached from the base body 110 in the horizontal direction. The filter assembly 10 is disposed to cross the flow direction of the air flowing in the vertical direction. The filter assembly 10 slides in a horizontal direction and filters air flowing upwardly. The filter assembly 10 is disposed horizontally and forms the filtering flow path 102 in the vertical direction.

The filter assembly 10 may include the filter housing 1200 disposed inside the lower body assembly 130 and forming the filtering flow path 102. The filter assembly 10 may include the filter 14 inserted to the filter housing 1200 passing through the side of the lower body assembly 130 and detachably coupled to the filter housing 1200 and filtering the flowing air. The filter assembly 10 may include a filter cover 11 coupled to the filter 14 and closing the lower cover opening 1341 of the lower body assembly 130. The filter assembly 10 may include a housing top cover 1210 covering the top surface of the filter housing 1200 and guiding the air inside the filter housing 1200 into the blowing unit 20.

The lower side of the filter housing 1200 communicates with the suction hole 101. The upper side of the filter housing 1200 communicates with a blowing flow path 108. A filtering flow path 102 is formed in the filter housing 1200. The filter 14 may be separably inserted into the filter housing 1200.

One side of the filter housing 1200 is opened in a direction crossing the filtering flow path 102. The filter 14 may be detachably coupled to the filter housing opening 1201 of the filter housing 1200. The filter housing opening 1201 of the filter housing 1200 is formed in a lateral direction. The filter housing opening 1201 of the filter housing 1200 is disposed toward the lower cover opening 1341 of the lower body assembly 130.

The filter 14 may be inserted into the filter housing 1200 through the lower cover opening 1341 of the lower body assembly 130. The filter 14 is disposed to intersect with the filtering flow path 102, and filters the air passing through the filtering flow path 102.

The filter 14 may be an electric dust collecting filter collecting the foreign substances in air by electrifying the foreign substance with the applied power. The filter 14 may be formed of a material that collects foreign substances in air through a filter medium. The filter 14 may have various structures. The rights of the present disclosure are not limited by the filtering method of the filter 14 or the filter medium of the filter 14.

The filtering flow path 102 is arranged in the same direction as the main flow direction of the humidification and air cleaning apparatus. In this embodiment, the filtering flow path 102 is arranged in an up-down direction and causes the air to flow in a direction opposite to gravity. That is, the main flow direction of the humidification and air cleaning apparatus has a path from the lower side to the upper side.

The filter housing 1200 is in the lower cover 1340.

The top surface, the bottom surface, the part of the side of the filter housing 1200 are opened.

The lower housing 1320 closes a part of the lower side of the filter housing 1200 and is assembled with the filter housing 1200.

The top surface of the filter housing 1200 is opened. A housing top cover 1210 is disposed on the top surface of the filter housing 1200 to cover the top surface of the filter housing 1200.

The housing top cover 1210 is concave downward and is located under the blowing fan 24. The housing top cover 1210 provides filtered air to the blowing fan 24. For this, the housing top cover 1210 has a housing top cover opening 1212 penetrated in the vertical direction.

The housing top cover opening 1212 is located inside the filter housing 1200. The housing top cover opening 1212 is disposed within the height of the filter housing 1200. The housing top cover opening 1212 is under a top surface of the filter housing 1200.

In addition, a top cover grill 1214 is disposed on the housing top cover opening. And a top cover guide 1216 is formed along the edge of the housing top cover opening.

The top cover guide 1216 is circular shape when viewed from the top. The top cover guide 1216 is protruded upwardly and guides the filtered air to the blowing fan 24. The top cover guide 1216 may be inserted into the blowing fan 24, and the resistance of the filtered air flowing to the blowing fan 24 may be minimized.

In this embodiment, the housing top cover opening 1212, the top cover grill 1214 and the top cover guide 1216 are manufactured as one body by injection molding.

Meanwhile, a part of the side surface of the filter housing 1200 is opened, which is defined as the filter housing opening 1201. The filter housing opening 1201 is inside the lower cover opening 1341 and is opened toward the lower cover opening 1341. The filter 14 passes through the lower cover opening 1341 and the filter housing opening 1201 in sequence, and then is inserted into the filter housing 1200.

The filter housing 1200 is inside the lower cover 1340 and is covered by the lower cover 1340. Although the lower cover 1340 is cylindrical shape, the filter housing 1200 is not cylindrical shape.

The filter housing 1200 provides the installation structure for installing electronic parts of the humidification and air cleaning apparatus. For this, the filter housing 1200 provides a front wall 1220, a left wall 1230 and a right wall 1240.

The filter housing opening 1201 is formed on a rear surface of the filter housing 1200.

When viewed from the outside, it is difficult to clarify the front surface because the overall shape of the humidification and air cleaning apparatus is cylindrical. In the present embodiment, the direction of the surface on which the filter housing opening 1201 is formed is defined as the rear, and the other direction is defined based on the filter housing opening 1201.

The filter housing 1200 may include the front wall 1220, the left wall 1230, the right wall 1240, a housing upper opening 1202, a housing lower opening 1203, the filter housing opening 1201. The housing upper opening 1202 is connected with the front wall 220, the left wall 1230, the right wall 1240. The housing upper opening 1202 is positioned above the front wall 1220, the left wall 1230, the right wall 1240. The housing upper opening 1202 has circular shape from top view. The housing lower opening 1203 is connected with the front wall 1220, the left wall 1230, the right wall 1240. The housing lower opening 1203 is positioned under the front wall 1220, the left wall 1230, the right wall 1240. The housing lower opening 1203 has circular shape from bottom view. The filter housing opening 1201 is connected with the left wall 1230 and the right wall 1240. The filter housing opening 1201 is formed toward the lower cover opening 1341 and in which the filter 14 is inserted.

The front wall 1220, the left wall 1230, and the right wall 1240 are formed flat.

A filter power supply unit 1401 for supplying power to the filter 14 is disposed on the front wall 1220.

The filter power supply 1401 is disposed at the opposite side to the filter housing opening 1201. When the filter 14 is completely inserted into the filter housing 1200, the filter power supply unit 1401 and the filter 14 are electrically connected.

For this, the filter power supply 1401 is disposed at the front which is opposite to the filter housing opening 1201. The filter 14 and the filter power supply 1401 are electrically connected only when the filter 14 contacts the front wall 1220 of the filter housing 1200.

In addition, a speaker 1420 of the voice recognition module 1400 is disposed on the front wall 1220. The speaker 1420 is concealed by the lower cover 1340. The speaker 1420 is disposed to face the front.

A resonant space 1221 is formed in the front wall 1220 where the speaker 1420 is installed. The resonant space 1221 is opened toward the front.

In order to form the resonant space 1221, a space wall 1222 protruding forward from the front wall 1220 is formed. The space wall 1222 may have a variety of shapes and may be formed in plural. In this embodiment, the front wall 1220 is used as a rear wall of the resonant space 1221.

### <<Composition of the Blowing Unit>>

Referring to FIG. 4, the blowing unit is disposed above the filter housing 1200.

The upper surface of the filter housing 1200 is opened. Air after passing through the filtering flow path flow into the blowing unit 20.

The blowing unit 20 induces the flow of air. The blowing unit 20 is disposed in the base body 110 and induces air to flow from the bottom to the top.

The blowing unit 20 is composed of a blowing housing 150, a blowing motor 22, the blowing fan 24. In the present embodiment, the blowing motor 22 is disposed above the blowing fan 24. A motor axis of the blowing motor 22 is installed thereunder and is assembled with the blowing fan 24.

The blowing housing 150 is disposed in the base body 110. The blowing housing 150 provides the flow path air. The blowing motor 22 and the blowing fan 24 are disposed in the blowing housing 150.

The blowing housing 150 is disposed above the filter assembly 10 and under the upper body assembly 120.

The blowing housing 150 forms the blowing flow path 108. The blowing fan 24 is disposed at the blowing flow path 108. The blowing path 108 connects the filtering flow path 102 and a clean connection flow path 104.

The blowing fan 24 is the centrifugal fan which sucks air from the lower side and discharges the sucked air in the radial direction, outward therefrom. The blowing fan 24 discharges air outwardly in the radial direction and to the upper side. The blowing fan 24 has an outer end facing a direction between the upward direction and the radial direction.

The blowing motor 22 is disposed above the blowing fan 24 to minimize contact with flowing air. The blowing fan 24 surrounds the blowing motor 22. The blowing motor 22 is not positioned in the flow path induced by the blowing fan 24 and do not generate a resistance to the flowing air by the blowing fan 24.

The blowing fan 24 is disposed above the housing top cover 1210. The blowing fan 24 is inserted into the housing top cover 1210 which is concave downward.

### <<Composition of the Upper Body Assembly>>

Referring to FIG. 4, The upper body assembly 120 includes an upper outer body 128, an upper inner body 140 and an air guide 170. The upper outer body 128 forms the outer shape of the base body 110 and is coupled to the lower body assembly 130. The upper inner body 140 is disposed inside the upper outer body 128 and provides a connection flow path 103. The water tank 300 is inserted into the upper inner body 140. The air guide 170 combines the upper inner body 140 and the upper outer body 128. The air guide 170 guides air to the water tank 300.

Since the upper body assembly 120 separates the connection flow path 103 and a space 125 where the water tank is inserted, it is possible to minimize the inflow of water in the water tank 300 into the connection flow path 103. Especially, since the connection flow path 103 is disposed outside a space in which the water is stored due to separation by the upper inner body 140, it is possible to prevent water from flowing into the connection flow path 103.

The upper side of the upper inner body 140 is opened and the water tank 300 is inserted thereinto. The upper inner body 140 forms a part of the clean connection flow path 104 where the filtered air is introduced.

An upper inlet 121, corresponding to an air wash inlet 31, is formed in the upper inner body 140. The upper inlet is not the essential element. It is enough that the upper inner body 140 has a shape enabling the upper body assembly 120 to expose the air wash inlet to the connection flow path 103.

The upper inner body 140 has a basket shape as a whole.
The upper inner body 140 has a circular shape when it is viewed from the horizontal cross-section.

A handle 129 may be formed on the upper outer body 128. Since the air wash module 200 is mounted on the upper body assembly 120, it is possible to lift, as a whole, the humidification and air cleaning apparatus.

The space 125 where the water tank is inserted is formed in the upper inner body 140.

An outer visual body 214 is coupled to the upper side of the upper body assembly 120.

Although the outer visual body 214 is the element of the visual body 210, in the present embodiment, it may be fixed to the upper body assembly 120. Unlike the present embodiment, the outer visual body 214 may be fixed to the air wash module 200. Unlike the present embodiment, the outer visual body 214 is a removable element.

The outer visual body 214 is formed of material that can see through inside thereof. The outer visual body 214 may be formed of transparent or translucent material.

A display module 160, displaying operation situation of at least one of the air clean module 100 and the air wash module 200, may be disposed at the outer visual body 214.

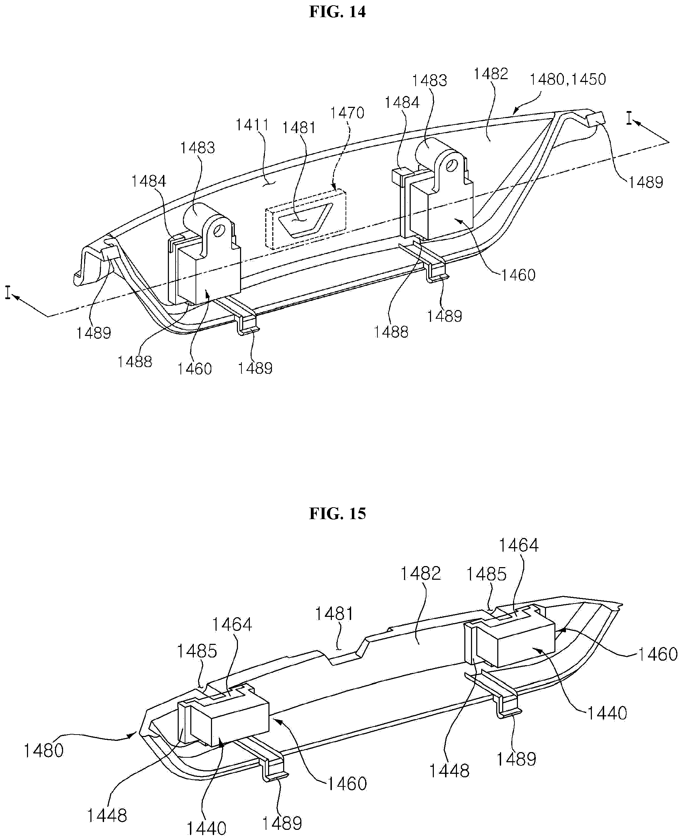

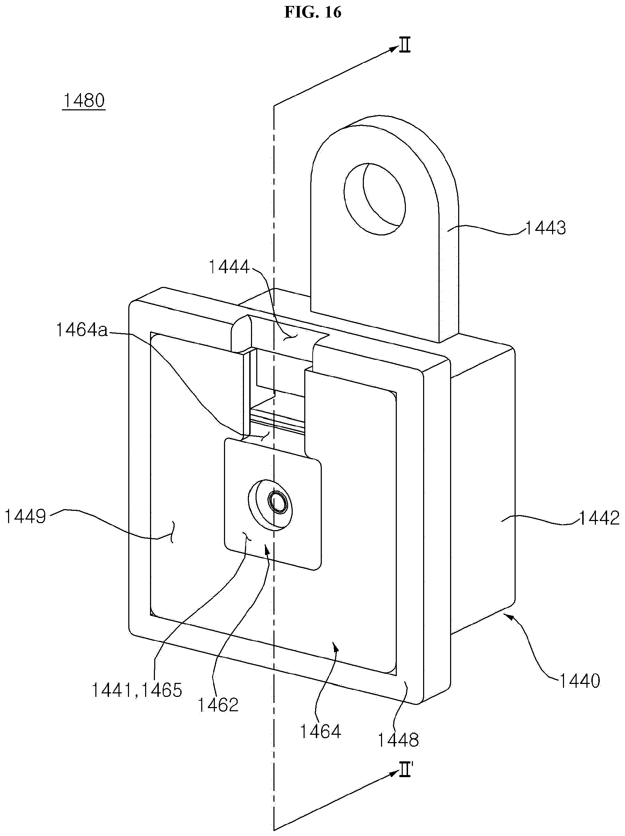

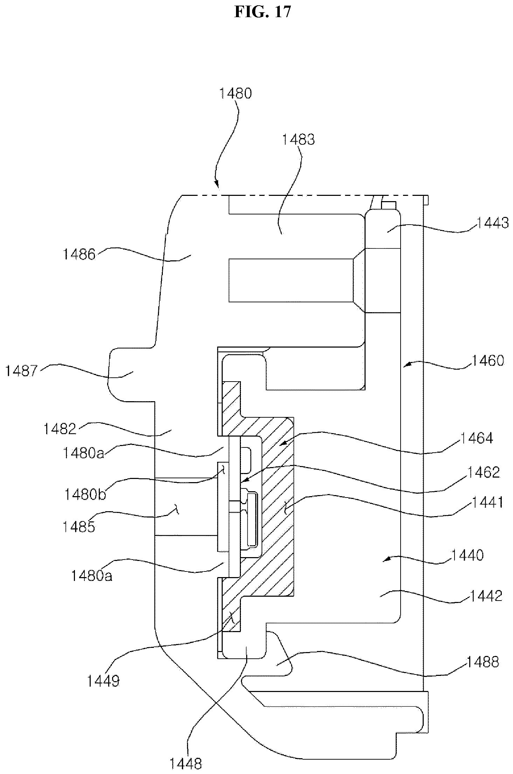

FIG. 14 is a perspective view showing the inside of the input assembly shown in FIG. 1. FIG. 15 is a cross-sectional perspective view cut along line I-I' of FIG. 14. FIG. 16 is a perspective view of the microphone shown in FIG. 14. FIG. 17 is a cross-sectional view cut along line II-II' shown in FIG. 16.

### <<Composition of Voice Recognition Module>>

Referring to FIGS. 5 and 14-17, The voice recognition module 1400 includes the input assembly 1410, the speaker 1420, a voice recognition control unit 1430. The input assembly 1410 is exposed to the outside of the base body 110. The speaker 1420 is concealed inside the base body 110. The voice recognition control unit 1430 is disposed inside the base body 110 and is electrically connected with the input assembly 1410 and the speaker 1420 and controls the input assembly 1410 and the speaker 1420.

The input assembly 1410 is disposed at the lower body 130 and is exposed to outside of the lower body 130. In the present embodiment, the input assembly 1410 is disposed to face the front. Unlike the present embodiment, the input assembly 1410 may be disposed to face other direction.

The speaker 1420 is installed in the resonant space 1221 disposed at the frontal surface of the filter housing 1200. Since the resonant space 1221 is opened to the front, sound from the speaker 1420 may propagate effectively to the front.

The speaker 1420 is assembled to the front wall 1220 of the filter housing 1200.

Although the speaker 1420 is hidden by the lower cover 1340, the speaker may realize enough volume by the resonant space 1221.

The voice recognition control unit is installed at the filter housing 1200. In the present embodiment, the voice recognition control unit 1430 is assembled to the right wall 1240 of the filter housing 1200. The voice recognition control unit 1430 controls the speaker 1420 and a microphone 1460 of the input assembly 1410.

The voice recognition control unit 1430 is electrically connected with the microphone 1460 and the speaker 1420. The voice recognition control unit 1430 is connected with a voice server 1000 via a fixed-line or wireless network. The voice recognition control unit 1430 sends and receives a data with the voice server 1000 via the fixed-line or wireless network.

For example, when the user speaks words containing the wake-up word (e.g., Hi, LG), the microphone 1460 send the words containing the wake-up word to the voice recognition control unit 1430, and the voice recognition control unit 1430 transmits the sent voice signal to the voice server 1000. In this case, the voice recognition control unit 1430 may reduce the noise and sense the wake-up word. The voice recognition control unit 1430 sends the natural language to the voice server 1000.

The voice server 1000 processes the sent voice data and controls the humidification and air cleaning apparatus according to the voice data.

### <Composition of Input Assembly>

The input assembly 1410 includes the input housing 1450, the microphone 1460, and a remote control sensor 1470. The input housing 1450 is assembled to the lower housing 1320 and is exposed to outside. The microphone is disposed inside the input housing 1450 and receives sound.

Since the microphone 1460 protrudes downward from the bottom of the lower housing 1320, it is possible to minimize effect of noise. Especially, since the microphone 1460 is disposed at the suction hole 101 formed between the lower housing 1320 and the lower base 1310, it is possible to minimize effect of moisture. When water seeps into the microphone 1460, the voice signal of the user may not be received effectively.

Since the microphone 1460 is disposed at the suction hole 101, the water is evaporated rapidly by flowing air.

In addition, since the microphone is separated from the watering unit 400 and the blowing unit 20, it is possible to minimize effect of operation noise. When the microphone 1460 is disposed near the blowing unit 20, the reception rate may decrease due to operation noise or vibration by the rotation of blowing fan 24. Since the microphone 1460 is positioned to protrude below the lower housing 1320, it is possible to minimize the effect of the operation noise and the vibration.

The input housing 1450 is disposed at the lower body assembly 130 and is exposed to an outside of the lower body assembly 130. In the present embodiment, the input housing 1450 is disposed to protrude from the bottom of the lower housing 1320. Especially, the input housing 1450 is assembled to penetrate the voice recognition module installation part 1324. When the input housing 1450 is assembled, it protrudes further downward from the bottom of the lower housing 1320.

The input housing 1450 is inserted into the lower housing in the direction from the top to the bottom. And the input housing 1450 and the stopper 1325 of the lower housing 1320 are hooked to each other.

In the present embodiment, the top surface of the input housing 1450 is opened and other surfaces thereof is closed.

The opened top surface of the input housing 1450 will be defined as an input housing opening part 1411. A cable (not shown) connected to the microphone 1460 or the remote control sensor 1470 passes through the input housing opening part 1411.

The input housing opening part 1411 communicates with a space between the filter housing 1200 and the lower cover 1340.

Since the input housing opening part 1411 is disposed on the top surface, the input housing 1450 is composed of a front housing 1480 disposed to face the front and a rear housing 1490 disposed to face the rear. In the present embodiment, the rear housing 1490 and the lower housing 1320 are produced in one body by the injection molding. Unlike the present embodiment, the rear housing 1490 and the lower housing 1320 may be produced separately and then may be assembled to each other.

The microphone 1460 and the remote control sensor 1470 are disposed between the front housing 1480 and the rear housing 1490. The front housing 1480 and the rear housing 1490 may be coupled to each other by fastening or hooking.

The front housing 1480 and the rear housing 1490, coupled to each other, are assembled to the voice recognition module installation part 1324.

The front housing 1480 provides surface continuous with the outer surface of the lower housing body 1322.

The front housing 1480 includes a front housing body 1482, a remote control reception hole 1481, a microphone fastening part 1483, a microphone supporting part 1484, a microphone reception hole 1485, a front housing lateral surface supporting part 1486, a front housing bottom supporting part 1487, a microphone coupling part 1488 and a housing coupling part 1489. The remote control reception hole 1481 is formed to penetrate the front housing body 1482 in back and forth. The microphone fastening part 1483 protrudes backward from a rear surface of the front housing body 1482. The microphone fastening part 1483 fastens and fixes the microphone 1460 thereto. The microphone supporting part 1484 protrudes backward from the rear surface of the front housing body 1482. The microphone supporting part 1484 and the microphone 1460 are in close contact. The microphone supporting part 1484 supports edges of the microphone 1460. The microphone reception hole 1485 is formed to penetrate the front housing body 1482 in back and forth. The front housing lateral surface supporting part 1486 is extended upward from the front housing body 1482. The front housing lateral surface supporting part 1486 provides surface continuous with the lower cover lateral surface supporting part 1326. The front housing bottom supporting part 1487 protrudes forward from the front housing body 1482. The front housing bottom supporting part 1487 provides surface continuous with the lower cover bottom supporting part 1327. The microphone coupling part 1488 protrudes backward from the rear surface of the front housing body 1482. The microphone coupling part 1488 is hooked to the microphone 1460. The housing coupling part 1489 protrudes backward from the front housing body 1482. The housing coupling part 1489 is coupled to the rear housing 1490.

Since the front housing 1480 is not only installed on the lower housing 1320 but also supported by the lower cover 1340, it is possible to reduce vibration caused by operation of the blowing unit 20.

Especially, since the front housing 1480, where the microphone 1460 is installed, is disposed to protrude downward from the bottom of the lower housing 1320, it is possible to block direct transmission, to the microphone 1460, of vibration.

The front housing body 1482 has a trapezoid shape, with an upper length thereof longer than a lower length thereof, when it is viewed from the front.

The remote control reception hole 1481 penetrates the front housing 1480 in back and forth. A transparent window may be disposed at the remote control reception hole 1481. The remote control sensor 1470 is disposed at the rear of the remote control reception hole 1481. The remote control sensor 1470 may receive IR signal of remote controller.

The microphone reception hole 1485 penetrate the front housing 1482 in back and forth. The microphone reception hole 1485 is disposed to face a side opposite to the lower housing suction hole 1321.

One microphone reception hole 1485 is disposed for one microphone 1460. In the present embodiment, since there are two microphones 1460, two microphone reception hole 1482 are formed.

The front housing 1480 further includes a microphone sensor supporting part 1480a. The microphone sensor supporting part 1480a supports a microphone sensor 1462, described later, and protrudes backward from the rear of the front housing body 1482. The microphone sensor supporting part 1480a is disposed around the microphone reception hole 1485.

The microphone sensor supporting part 1480a protrudes toward the microphone sensor 1462 and forms a gap 1480b between the microphone reception hole 1485 and the microphone sensor 1462.

The microphone reception holes 1485 are formed at both left and right side of the remote control reception hole 1481. For easy explanation, when viewed from the front, microphone reception hole disposed at left side of the remote control reception hole 1481 is defined as a left microphone reception hole, and microphone reception hole disposed at right side of the remote control reception hole 1481 is defined as a right microphone reception hole.

Likewise, microphone disposed at left side of the remote control sensor 1470 is defined as a left microphone, and microphone disposed at right side of the remote control sensor 1470 is defined as a right microphone.

The left microphone and the right microphone are disposed horizontally. The left microphone, the right microphone, and the remote control sensor 1470 are arranged in a line.

The microphone 1460 is installed at a rear of the microphone reception hole 1485. The microphone reception hole 1485 is penetrated and opened. The rear of the microphone reception hole 1485 is closed by contact of the microphone 1460. Since the microphone reception hole 1485 is opened only forward, it is possible to minimize input, into the microphone 1460, of noise.

The microphone 1460 is fastened and fixed to the microphone fastening part 1483.

The microphone fastening part 1483 protrudes backward from the rear of the front housing body 1482. The microphone fastening part 1483 is disposed above the microphone 1460. The microphone coupling part 1488 is disposed under the microphone 1460.

The microphone coupling part 1488 and the microphone 1460 are hooked to each other and then fastened to each other. Since the upper side and the lower side of the microphone 1460 are assembled respectively, the microphone 1460 may have close contact, toward the front housing body 1482, with the front housing body 1482.

The microphone fastening part 1483 and the microphone coupling part 1488 are preferably disposed opposite to each other with respect to the microphone 1460. Unlike the present embodiment, the microphone fastening part 1483 and the microphone coupling part 1488 may be disposed on the left and right of the microphone 1460.

The microphone supporting part 1484 supports edges of the microphone 1460 and restricts movement of the microphone 1460. In this embodiment, the microphone supporting part 1484 is a rib that protrudes backward from the rear of the front housing body 1482.

The microphone supporting part 1484 is disposed between the microphone fastening part 1483 and the microphone coupling part 1488. In this embodiment, the microphone supporting part 1484 is disposed under the microphone fastening part 1483 and supports an upper end of the microphone 1460.

The microphone supporting part 1484 supports at least two surfaces of the microphone 1460. In the present embodiment, the microphone supporting part 1484 supports the upper, left and right surfaces of the microphone 1460.

The microphone 1460 is hooked to the microphone coupling part 1488 in contact with the microphone supporting part 1484. The microphone supporting part 1484 provides an assembly position of the microphone 1460.

The housing coupling part 1489 is for coupling with the rear housing 1490. In the present embodiment, the housing coupling part 1489 is hook-coupled to the rear housing 1490. In the present embodiment, the housing coupling part 1489 has four places at both side of top and bottom, respectively.

Referring to FIGS. 10-12, the input housing 1450 is disposed at the outer space 101a.

The input housing 1450 is disposed in front of the leg wall 1350. The input housing 1450 and the leg wall 1350 are disposed to face each other.

A width, in right and left direction, of the leg wall 1350 is formed to be longer than a width, in right and left direction, of the input housing 1450. An area of the leg wall 1350 is formed to be wider than an area of the input housing 1450. A projection, on the leg wall 1350, of the input housing 1450 may be disposed within the area of the leg wall 1350.

The input housing 1450 is disposed between the first leg 1331 and the second leg 1332. A length between the first leg 1331 and the second leg 1332 is formed to be longer than a length between the left end 1451 and the right end 1452. The left end 1451 and the right end 1452 are disposed in the length between the first leg 1331 and the second leg 1332.

Especially, the microphone reception hole 1485 is disposed between the first leg 1331 and the second leg 1332. The microphone reception hole 1485 is positioned in front of the outer space 101a.

Toward the outward in the radial direction, a distance between the first leg 1331 and the second leg 1332 becomes longer. Two microphone reception holes 1485 are disposed between the first leg 1331 and the second leg 1332.

In the present embodiment, an angle between the first leg 1331 and the second leg 1332 is 60 degrees.

The outer space 101a formed to be surrounded by a right surface 1331a of the first leg 1331, the front surface of the leg wall 1350 and a left surface 1332a of the second leg 1332.

The input housing 1450 is positioned in front of the outer space 101a. The voice of the user may be reflected in the leg wall 1350 and may be propagated, by the reflection, to the input housing 1450. A structure forming the outer space 101a may reflect, to the microphone reception hole 1485, the voice. The structures may suppress the noise from the lower housing suction hole 1321.

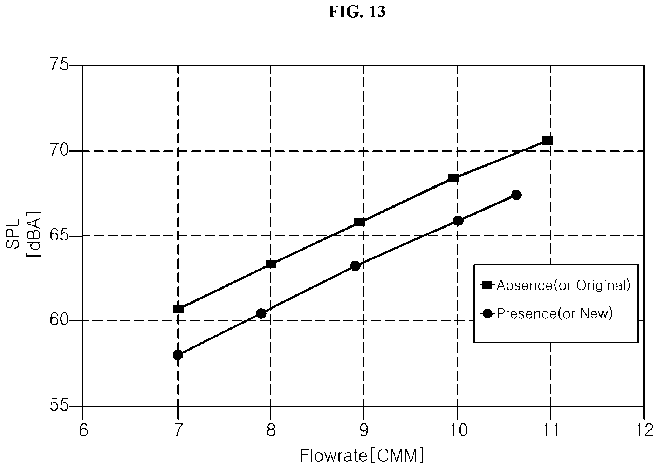

FIG. 13 is a graph showing the magnitude of the noise depending on the presence of the leg wall 1350. When a flow rate (cmm) increases by rotating the blowing motor 22 more rapidly, the noise in the microphone 1460 is sensed.

As shown in the graph, when the leg wall 1350 is disposed, the noise reduces by 2.5 dB.

### <Composition of Microphone>

Referring to FIGS. 16, 17, the microphone 1460 is disposed at the rear of the microphone reception hole 1485.

The microphone 1460 includes the microphone sensor 1462, a sealing pad 1464 and a microphone housing 1440. The microphone sensor 1462 is exposed to the microphone reception hole 1485 that a front surface thereof is formed in the input housing 1450 (In the present embodiment, the front housing). The sealing pad 1464 pressurizes the microphone sensor 1462 toward the input housing 1450 and covers surfaces excluding the front surface of the microphone sensor 1462. The microphone housing 1440 is assembled to the input housing 1450 (In the present embodiment, the front housing) and disposed at a rear of the sealing pad 1464 and pressurizes the sealing pad 1464 toward the input housing 1450.

The microphone sensor 1462 contact the microphone sensor supporting part 1480a protruding from the front housing body 1482. The microphone sensor 1462 is supported by the microphone sensor supporting part 1480a. So, the microphone sensor 1462 is spaced apart, by a gap 1480b, from a rear end of the microphone reception hole.

The sealing pad 1464 covers the surfaces excluding the front surface of the microphone sensor. For this, the sealing pad 1464 has area wider than that of the microphone sensor 1462 and the microphone sensor 1462 is disposed inside the sealing pad 1464.

For this, a sensor insertion groove 1465, through which the microphone sensor 1462 passes, is formed on the sealing pad 1464. The sensor insertion groove 1465 is formed concavely, to the rear side, on a front surface of the sealing pad 1464.

The sealing pad 1464 is formed of elastic material and supports the microphone sensor 1462. The sealing pad 1464 blocks the inflow of alien substance or moisture into the microphone sensor 1462. The front surface of the sealing pad 1464 contacts the rear surface of the front housing body 1482. The front surface of the sealing pad 1464 and the front surface of the microphone sensor 1462 may be positioned on the same line.

In the present embodiment, a cable channel, for wiring of the microphone sensor 1462, is formed on the sealing pad 1464. A cable may be connected to a rear of the microphone sensor 1462. But, in the present embodiment, the cable is connected to a top of the microphone sensor 1462. For this, the cable channel 1464a, for connecting the cable with the microphone sensor 1462, is formed. The cable channel 1464a is formed by cutting the sealing pad 1464 and disposed at an upper side of the sealing pad 1464. The cable channel 1464a is formed in the up and down direction.

The microphone housing 1440 includes the microphone housing 1440, a microphone housing body 1442, a microphone insertion groove 1441, a microphone housing border 1448, a microphone housing fastening part 1443 and a microphone housing channel 1444. The microphone housing insertion groove 1441 is formed concavely, to the rear side, in a front surface of the microphone housing body 1442. The microphone housing border 1448 is disposed at the microphone housing body 1442 and protrudes outward from the microphone housing body 1442 and couples to the microphone coupling part 1488 on the front housing 1480. The microphone housing fastening part 1443 protrudes from the microphone housing body 1442 and is fastened to the microphone fastening part 1483 on the front housing 1480. The microphone housing channel 1444, through which the cable of the microphone sensor 1462 passes, is formed concavely at the front surface of the microphone housing body 1442.

The microphone housing insertion groove 1441, into which the rear of the sealing pad 1464 is inserted, is formed at the microphone housing body 1442.

In addition, a pad groove 1449, into which a front of the sealing pad 1464 is inserted, is formed at an inner side of the microphone housing border 1448. The pad groove 1449 is formed to be concave backwardly. The microphone housing border 1448 contacts a rear surface of the front housing 1480.

The pad groove 1449 is disposed in front of the microphone insertion groove 1441. The microphone sensor 1462 may be inserted into the microphone housing insertion groove 1441.

The microphone housing border 1448 protrudes outward from the microphone housing 1442 and is formed along border of the microphone housing 1442.

Shown from the front, an area of the microphone housing border 1448 formed to be wider than an area of the microphone housing 1442. The microphone housing border 1448 has the shape of rectangular frame view from the front.

The microphone housing channel 1444 is disposed to pierce an upper side of the microphone housing border 1448. The microphone housing channel 1444 is disposed above the cable channel 1464a and is connected with the cable channel 1464a.

Since the microphone housing border 1448 protrudes outwardly more than the microphone housing body 1442, the microphone coupling part 1488 is hooked and fixed to a rear surface of the microphone housing border 1448.

The microphone coupling part 1488 is extended to the rear from the front and supports a lower side of the microphone housing border 1448 and is hooked and fixed to the rear surface of the microphone housing border 1448.

The microphone housing fastening part 1443 protrudes upwardly from the microphone housing body 1442. The microphone housing fastening part 1443 is fastened and fixed to the microphone fastening part 1483. The microphone housing fastening part 1443 is positioned at a rear of the microphone fastening part 1483.

Hereinabove, although the present invention has been described with reference to exemplary embodiments and the accompanying drawings, the present invention is not limited thereto, but may be variously modified and altered by those skilled in the art to which the present invention pertains without departing from the scope of the present invention claimed in the following claims.

The humidification and air cleaning apparatus has one or more of the following effects

First, since the input assembly 1410 is exposed to the outside thereof, it is possible to effectively recognize the voice of the user.

Second, since the leg wall 1350 is disposed between the input assembly 1410 and the lower housing suction hole 1321, it is possible to suppress the noise, propagating to the input assembly 1410, by the blowing unit 20.

Third, since the leg wall 1350 and the plurality of legs 1330 form the concave space and the input assembly 1410 is disposed in front of the concave space, it is possible to reflect the voice signal of the user toward the input assembly 1410.

Fourth, since the input assembly 1410 is disposed on the lower housing 1320, disposed far from the watering unit 400 or the blowing unit 20 which generate the noise, and the input housing 1450 is disposed in the outer space 101a surrounded by the first leg 1331, the second leg 1332 and the leg wall 1350, it is possible to minimize the effect of the operating noise.

Fifth, since the input assembly 1410, in which the microphone 1460 is disposed, is disposed at an outside of the leg wall 1350, it is possible to minimize the effect of the moisture.

The effects of the present invention are not limited to the effects mentioned above, and other effects that are not mentioned would be clearly understood by those skilled in the art from the description of the claims.

## Claims

1. A humidification and air cleaning apparatus comprising:
a lower base (1310) for supporting the apparatus;
a lower housing (1320) spaced apart from the lower base (1310) for forming a suction gap therebetween;
a plurality of legs (1330) disposed between the lower base (1310) and the lower housing (1320) for supporting the lower housing (1320) on the lower base (1310); and
a leg wall (1350) connecting a first leg (1331) and a second leg (1332) adjacent to each other;
**characterized in that** the humidification and air cleaning apparatus comprising:
an input assembly (1410) disposed at the lower housing (1320) and protruding into the suction gap (D) toward the lower base (1310) and configured to receive a wireless signal,
wherein the leg wall (1350) is disposed between the input assembly (1410) and a vertical center line of the apparatus.

2. The humidification and air cleaning apparatus according to claim 1, further comprising:
a lower housing suction hole (1321) formed through the lower housing (1320) in a vertical direction,
wherein the leg wall (1350) is disposed between the lower housing suction hole (1321) and the input assembly (1410).

3. The humidification and air cleaning apparatus according to claim 1 or 2, wherein the leg wall (1350) connects the lower housing (1320) and the lower base (1310).

4. The humidification and air cleaning apparatus according to any one of the preceding claims, wherein the leg wall (1350) is inclined with respect to the vertical direction.

5. The humidification and air cleaning apparatus according to any one of the preceding claims,
wherein a second end (1352) of the leg wall (1350) adjacent to the lower housing (1320) is disposed closer to the vertical center line than a first end (1351) of the leg wall (1350) adjacent to the lower base (1310).

6. The humidification and air cleaning apparatus according to any one of the preceding claims, wherein the input assembly (1410) comprises a microphone reception hole (1485) for allowing a voice signal to pass therethrough,
wherein a vertical position of the leg wall (1350) correspond to a vertical position of the microphone reception hole (1485) is disposed within a height of the leg wall.

7. The humidification and air cleaning apparatus according to any one of the preceding claims, wherein the lower housing (1320), when viewed from the top, has a circular shape,
wherein the input assembly (1410) is disposed outside the leg wall (1350) in a radial direction of the lower housing (1320).

8. The humidification and air cleaning apparatus according to any one of the preceding claims, wherein the legs (1330) are disposed circumferentially with regard to a center of the lower housing (1320).

9. The humidification and air cleaning apparatus according to any one of the preceding claims, wherein the leg wall (1350) has a flat surface facing the input assembly (1410).

10. The humidification and air cleaning apparatus according to any one of the preceding claims, further comprising:
an outer space defined between the first leg (1331), the second leg (1332) and the leg wall (1350) and open towards the suction gap (D),
wherein the first leg (1331) and the second leg (1332) protrude further radially outwards than the leg wall (1350) so that the outer space is formed to be concave from the outside.

11. The humidification and air cleaning apparatus according to claim 10, wherein the input assembly (1410) is disposed in the outer space.

12. The humidification and air cleaning apparatus according to any one of the preceding claims, wherein the input assembly (1410) comprises:
an input housing (1450) having a microphone reception hole (1485); and
a microphone (1460) disposed at the input housing (1450) and exposed partially to an outside through the microphone reception hole (1485).

13. The humidification and air cleaning apparatus according to claim 12, wherein the input housing (1450) is disposed to face the leg wall (1350).

14. The humidification and air cleaning apparatus according to claim 12 or 13, wherein the input housing (1450) is disposed between the first leg (1331) and the second leg (1332).

15. The humidification and air cleaning apparatus according to any one of the preceding claims, wherein the input assembly (1410) is arranged at a circumferential edge of the lower housing (1320) or of the lower base (1310).

## Patentansprüche

1. Befeuchtungs- und Luftreinigungsvorrichtung, die Folgendes umfasst:
eine untere Basis (1310) zum Tragen der Vorrichtung;
ein unteres Gehäuse (1320), das von der unteren Basis (1310) beabstandet ist, um dazwischen einen Ansaugspalt auszubilden;
mehrere Füße (1330), die zwischen der unteren Basis (1310) und dem unteren Gehäuse (1320) zum Tragen des unteren Gehäuses (1320) auf der unteren Basis (1310) angeordnet sind; und
eine Fußwand (1350), die einen ersten Fuß (1331) und einen zweiten Fuß (1332), die nebeneinanderliegen, verbindet;
**dadurch gekennzeichnet, dass** die Befeuchtungs- und Luftreinigungsvorrichtung Folgendes umfasst:
eine Eingabeanordnung (1410), die am unteren Gehäuse (1320) angeordnet ist und in den Ansaugspalt (D) zur unteren Basis (1310) hin vorsteht und konfiguriert ist, ein Signal drahtlos zu empfangen,
wobei die Fußwand (1350) zwischen der Eingabeanordnung (1410) und einer vertikalen Mittellinie der Vorrichtung angeordnet ist.

2. Befeuchtungs- und Luftreinigungsvorrichtung nach Anspruch 1, die ferner Folgendes umfasst:
ein Ansaugloch (1321) im unteren Gehäuse, das durch das untere Gehäuse (1320) in einer vertikalen Richtung ausgebildet ist,
wobei die Fußwand (1350) zwischen dem Ansaugloch (1321) im unteren Gehäuse und der Eingabeanordnung (1410) angeordnet ist.

3. Befeuchtungs- und Luftreinigungsvorrichtung nach Anspruch 1 oder 2, wobei die Fußwand (1350) das untere Gehäuse (1320) und die untere Basis (1310) verbindet.

4. Befeuchtungs- und Luftreinigungsvorrichtung nach einem der vorhergehenden Ansprüche, wobei die Fußwand (1350) in Bezug auf die vertikale Richtung geneigt ist.

5. Befeuchtungs- und Luftreinigungsvorrichtung nach einem der vorhergehenden Ansprüche,
wobei ein zweites Ende (1352) der Fußwand (1350) angrenzend an das untere Gehäuse (1320) im Vergleich zum ersten Ende (1351) der Fußwand (1350) angrenzend an die untere Basis (1310) näher bei der vertikalen Mittellinie angeordnet ist.

6. Befeuchtungs- und Luftreinigungsvorrichtung nach einem der vorhergehenden Ansprüche, wobei die Eingabeanordnung (1410) ein Mikrofonaufnahmeloch (1485) umfasst, durch das ein Sprachsignal hindurchgelangen kann,
wobei die vertikale Position der Fußwand (1350) entsprechend einer vertikalen Position des Mikrofonaufnahmelochs (1485) innerhalb einer Höhe der Fußwand angeordnet ist.

7. Befeuchtungs- und Luftreinigungsvorrichtung nach einem der vorhergehenden Ansprüche, wobei das untere Gehäuse (1320) in Draufsicht eine Kreisform hat,
wobei die Eingabeanordnung (1410) außerhalb der Fußwand (1350) in einer radialen Richtung des unteren Gehäuses (1320) angeordnet ist.

8. Befeuchtungs- und Luftreinigungsvorrichtung nach einem der vorhergehenden Ansprüche, wobei die Füße (1330) in Bezug auf die Mitte des unteren Gehäuses (1320) längs des Umfangs angeordnet sind.

9. Befeuchtungs- und Luftreinigungsvorrichtung nach einem der vorhergehenden Ansprüche, wobei die Fußwand (1350) eine flache Oberfläche hat, die zur Eingabeanordnung (1410) zeigt.

10. Befeuchtungs- und Luftreinigungsvorrichtung nach einem der vorhergehenden Ansprüche, die ferner Folgendes umfasst:
einen Außenraum, der zwischen dem ersten Fuß (1331), dem zweiten Fuß (1332) und der Fußwand (1350) definiert ist und sich zum Ansaugspalt (D) hin öffnet,
wobei der erste Fuß (1331) und der zweite Fuß (1332) im Vergleich zur Fußwand (1350) radial weiter nach außen vorstehen, so dass der Außenraum so ausgebildet ist, dass er von der Außenseite her konkav ist.

11. Befeuchtungs- und Luftreinigungsvorrichtung nach Anspruch 10, wobei die Eingabeanordnung (1410) im Außenraum angeordnet ist.

12. Befeuchtungs- und Luftreinigungsvorrichtung nach einem der vorhergehenden Ansprüche, wobei die Eingabeanordnung (1410) Folgendes umfasst:
ein Eingabegehäuse (1450), das ein Mikrofonaufnahmeloch (1485) aufweist; und
ein Mikrofon (1460), das am Eingabegehäuse (1450) angeordnet ist und durch das Mikrofonaufnahmeloch (1485) teilweise nach außen freiliegt.

13. Befeuchtungs- und Luftreinigungsvorrichtung nach Anspruch 12, wobei das Eingabegehäuse (1450) so angeordnet ist, dass es zur Fußwand (1350) zeigt.

14. Befeuchtungs- und Luftreinigungsvorrichtung nach Anspruch 12 oder 13, wobei das Eingabegehäuse (1450) zwischen dem ersten Fuß (1331) und dem zweiten Fuß (1332) angeordnet ist.

15. Befeuchtungs- und Luftreinigungsvorrichtung nach einem der vorhergehenden Ansprüche, wobei die Eingabeanordnung (1410) an einer Umfangskante des unteren Gehäuses (1320) oder der unteren Basis (1310) angeordnet ist.

## Revendications

1. Appareil d'humidification et d'épuration d'air comportant :
une base inférieure (1310) pour supporter l'appareil ;
un boîtier inférieur (1320) espacé de la base inférieure (1310) pour former un espace d'aspiration entre ceux-ci ;
une pluralité de pieds (1330) disposés entre la base inférieure (1310) et le boîtier inférieur (1320) pour supporter le boîtier inférieur (1320) sur la base inférieure (1310) ; et
une paroi de pied (1350) reliant un premier pied (1331) et un second pied (1332) adjacents l'un à l'autre ;
**caractérisé en ce que** l'appareil d'humidification et d'épuration d'air comporte :
un ensemble d'entrée (1410) disposé sur le boîtier inférieur (1320) et faisant saillie dans l'espace d'aspiration (D) vers la base inférieure (1310) et configuré pour recevoir un signal sans fil,
dans lequel la paroi de pied (1350) est disposée entre l'ensemble d'entrée (1410) et une ligne centrale verticale de l'appareil.

2. Appareil d'humidification et d'épuration d'air selon la revendication 1, comportant en outre :
un trou d'aspiration de boîtier inférieur (1321) formé à travers le boîtier inférieur (1320) dans une direction verticale,
dans lequel la paroi de pied (1350) est disposée entre le trou d'aspiration de boîtier inférieur (1321) et l'ensemble d'entrée (1410).

3. Appareil d'humidification et d'épuration d'air selon la revendication 1 ou 2, dans lequel la paroi de pied (1350) relie le boîtier inférieur (1320) et la base inférieure (1310).

4. Appareil d'humidification et d'épuration d'air selon l'une quelconque des revendications précédentes, dans lequel la paroi de pied (1350) est inclinée par rapport à la direction verticale.

5. Appareil d'humidification et d'épuration d'air selon l'une quelconque des revendications précédentes,
dans lequel une seconde extrémité (1352) de la paroi de pied (1350) adjacente au boîtier inférieur (1320) est disposée plus près de la ligne centrale verticale qu'une première extrémité (1351) de la paroi de pied (1350) adjacente à la base inférieure (1310).

6. Appareil d'humidification et d'épuration d'air selon l'une quelconque des revendications précédentes, dans lequel l'ensemble d'entrée (1410) comporte un trou de réception de microphone (1485) pour permettre à un signal vocal de passer à travers celui-ci,
dans lequel une position verticale de la paroi de pied (1350) correspondant à une position verticale du trou de réception de microphone (1485) est disposée dans les limites d'une hauteur de la paroi de pied.

7. Appareil d'humidification et d'épuration d'air selon l'une quelconque des revendications précédentes, dans lequel le boîtier inférieur (1320), lorsqu'il est vu de dessus, a une forme circulaire,
dans lequel l'ensemble d'entrée (1410) est disposé à l'extérieur de la paroi de pied (1350) dans une direction radiale du boîtier inférieur (1320).

8. Appareil d'humidification et d'épuration d'air selon l'une quelconque des revendications précédentes, dans lequel les pieds (1330) sont disposés de manière circonférentielle par rapport à un centre du boîtier inférieur (1320).

9. Appareil d'humidification et d'épuration d'air selon l'une quelconque des revendications précédentes, dans lequel la paroi de pied (1350) a une surface plane dirigée vers l'ensemble d'entrée (1410).

10. Appareil d'humidification et de purification d'air selon l'une quelconque des revendications précédentes, comportant en outre :
un espace extérieur défini entre le premier pied (1331), le second pied (1332) et la paroi de pied (1350) et ouvert vers l'espace d'aspiration (D),
dans lequel le premier pied (1331) et le second pied (1332) font radialement saillie plus vers l'extérieur que la paroi de pied (1350), de sorte que l'espace extérieur est formé pour être concave par rapport à l'extérieur.

11. Appareil d'humidification et d'épuration d'air selon la revendication 10, dans lequel l'ensemble d'entrée (1410) est disposé dans l'espace extérieur.

12. Appareil d'humidification et d'épuration d'air selon l'une quelconque des revendications précédentes, dans lequel l'ensemble d'entrée (1410) comporte :
un boîtier d'entrée (1450) ayant un trou de réception de microphone (1485) ; et
un microphone (1460) disposé sur le boîtier d'entrée (1450) et exposé partiellement à un extérieur à travers le trou de réception de microphone (1485).

13. Appareil d'humidification et d'épuration d'air selon la revendication 12, dans lequel le boîtier d'entrée (1450) est disposé de manière à faire face à la paroi de pied (1350).

14. Appareil d'humidification et d'épuration d'air selon la revendication 12 ou 13, dans lequel le boîtier d'entrée (1450) est disposé entre le premier pied (1331) et le second pied (1332).

15. Appareil d'humidification et d'épuration d'air selon l'une quelconque des revendications précédentes, dans lequel l'ensemble d'entrée (1410) est agencé sur un bord circonférentiel du boîtier inférieur (1320) ou de la base inférieure (1310).
